# EUROPÄISCHE PATENTSCHRIFT

(11) **EP 2 391 021 B1**
(45) Veröffentlichungstag und Bekanntmachung des Hinweises auf die Patenterteilung: **01.04.2020**
(21) Anmeldenummer: 11165815.9
(22) Anmeldetag: 12.05.2011
(51) Int. Cl.: G06F 21/54, G06F 21/60, G06F 21/62, H04L 29/06

(54) **Softwarebasiertes Funkgerät**
Software-based radio device
Appareil radio basé sur un logiciel

(30) Priorität: 26.05.2010 DE 102010021620; 15.09.2010 DE 102010045546
(43) Veröffentlichungstag der Anmeldung: 30.11.2011
(73) Patentinhaber: Rohde & Schwarz GmbH & Co. KG, 81671 München (DE)
(72) Erfinder: Schippan, Erich, 85614 Kirchseeon (DE)
(74) Vertreter: Körfer, Thomas

(56) Entgegenhaltungen:
- US-A1- 2005 055 689
- US-A1- 2008 016 313
- US-A1- 2008 184 038
- US-A1- 2008 253 434

## Beschreibung

Die Erfindung betrifft ein softwarebasiertes Funkgerät.

Herkömmlich werden zur verschlüsselten Kommunikation Funkgeräte eingesetzt, welche eine verschlüsselte Seite, eine Verschlüsselungseinrichtung und eine unverschlüsselte Seite aufweisen. Die verschlüsselte Seite verarbeitet dabei lediglich verschlüsselte Daten. Die unverschlüsselte Seite verarbeitet dabei lediglich unverschlüsselte Daten. Dabei muss stets nachprüfbar dargestellt werden, dass schützenswerte Information, welche mit diesen Funkgeräten übertragen wird, eine Reihe von Kriterien erfüllt. So darf die zu übertragende Information nicht verändert werden. Weiterhin darf die Information weder absichtlich noch unabsichtlich abfließen. Darüber hinaus muss die Information geeignet verschlüsselt werden, bevor Sie an die Antenne geschickt wird. Damit ein Funkgerät die genannten Kriterien erfüllt, muss für jede einzelne Komponente des Funkgeräts nachgewiesen sein, dass auch diese die genannten Kriterien erfüllt. Dies stellt in der Praxis einen erheblichen, oftmals nicht zu leistenden Aufwand dar.

So zeigt die Druckschrift DE 10 2005 050 174 A1 ein Kommunikationsnetz, welches ein Verschlüsselungsmodul einsetzt. Es ist dort jedoch problematisch, dass ein Beweis der Datensicherheit nur unter größerem Aufwand realisierbar ist.

In der US 2008/0184038 A1 ist ein Verfahren zum Überprüfen von Software in einem softwarebasierenden Funkgerät beschrieben, welches programmierbar und rekonfigurierbar ist. Das Gerät unterstützt unterschiedliche Wellenformen und es ist unterteilt in einen roten und schwarzen Bereich. Der schwarze Bereich beinhaltet nicht-sensitive Daten, der rote Bereich sensitive und nicht-sensitive Daten der Sicherheit. Diese sind mit einer Verschlüsslungseinheit miteinander verbunden. Vor dem Betreiben des SDR-Geräts muss die in verschlüsselter Form abgelegte Software geladen und validiert werden muss.

Der Erfindung liegt die Aufgabe zugrunde, ein Funkgerät zur verschlüsselten Kommunikation zu schaffen, welches Informationen verfälschungssicher übermittelt und gleichzeitig einen geringen Herstellungsaufwand verursacht.

Die Aufgabe wird erfindungsgemäß für das Funkgerät durch die Merkmale des unabhängigen Anspruchs 1 gelöst. Vorteilhafte Weiterbildungen sind Gegenstand der hierauf rückbezogenen Unteransprüche.

Ein erfindungsgemäßes Funkgerät verfügt über eine Verschlüsselungseinrichtung, eine erste Verarbeitungseinrichtung und eine zweite Verarbeitungseinrichtung. Die erste Verarbeitungseinrichtung verarbeitet unverschlüsselte Daten, während die zweite Verarbeitungseinrichtung verschlüsselte Daten verarbeitet. Die Verschlüsselungseinrichtung verschlüsselt und entschlüsselt die Daten. Die erste Verarbeitungseinrichtung beinhaltet eine Steuersignalverarbeitungseinrichtung zur Verarbeitung von lediglich Steuersignalen und/oder eine Nutzdatenverarbeitungseinrichtung zur Verarbeitung von lediglich Nutzdaten und/oder von mit Nutzdaten verknüpften Steuersignalen. So wird eine Reduktion des Herstellungsaufwands gegenüber einem herkömmlichen verschlüsselnden Funkgerät erreicht.

Die Steuersignalverarbeitungseinrichtung und die Nutzdatenverarbeitungseinrichtung nutzen bevorzugt einen gemeinsamen Prozessor. So kann der Herstellungsaufwand weiter reduziert werden.

Die Steuersignalverarbeitungseinrichtung und die Nutzdatenverarbeitungseinrichtung verfügen bevorzugt jeweils über eine dedizierte Speicherpartition. So wird die Datensicherheit des Funkgeräts weiter erhöht.

Die Steuersignalverarbeitungseinrichtung beinhaltet bevorzugt eine erste Wellenformverarbeitungseinrichtung zur Verarbeitung wellenformspezifischer Daten und eine erste Plattformverarbeitungseinrichtung zur Verarbeitung plattformspezifischer Daten. Die Nutzdatenverarbeitungseinrichtung beinhaltet bevorzugt eine zweite Wellenformverarbeitungseinrichtung zur Verarbeitung wellenformspezifischer Daten und eine zweite Plattformverarbeitungseinrichtung zur Verarbeitung plattformspezifischer Daten. So wird eine weitere Erhöhung der Datensicherheit des Funkgeräts erreicht.

Die erste Wellenformverarbeitungseinrichtung, die erste Plattformverarbeitungseinrichtung, die zweite Wellenformverarbeitungseinrichtung und die zweite Plattformverarbeitungseinrichtung verfügen bevorzugt jeweils über eine dedizierte Speicherpartition. So wird eine weitere Erhöhung der Datensicherheit des Funkgeräts erreicht.

Die zweite Verarbeitungseinrichtung beinhaltet vorteilhafterweise eine dritte Wellenformverarbeitungseinrichtung zur Verarbeitung wellenformspezifischer Daten und eine dritte Plattformverarbeitungseinrichtung zur Verarbeitung plattformspezifischer Daten. Auch durch diese Maßnahme wird eine Verbesserung der Datensicherheit erzielt.

Die dritte Wellenformverarbeitungseinrichtung und die dritte Plattformverarbeitungseinrichtung verfügen jeweils bevorzugt über eine dedizierte Speicherpartition. So wird eine Trennung der Daten und damit eine Verbesserung der Datensicherheit erzielt.

Vorteilhafterweise beinhaltet das Funkgerät ein Betriebssystem, welches mehrere Speicherpartitionen und zumindest einen Prozessor verwaltet. Das Betriebssystem verwaltet dabei vorteilhafterweise sensible Daten abhörsicher und verfälschungssicher. So wird eine weitere Verbesserung der Datensicherheit erzielt.

Das Funkgerät beinhaltet bevorzugt weiterhin eine Ladeeinrichtung, welche eine Rekonfigurierung des Funkgeräts durchführt. Durch diese Maßnahme wird ein versehendliches Abfließen von noch durch das Funkgerät gespeicherten Daten während einer Rekonfigurierung verhindert und damit die Datensicherheit verbessert.

Die Ladeeinrichtung verfügt dabei bevorzugt über eine dedizierte Speicherpartition. Durch die strikte Trennung der Daten der Ladeeinrichtung wird eine weitere Verbesserung der Datensicherheit gewährleistet.

Die Ladeeinrichtung hält bevorzugt bei der Rekonfigurierung des Funkgeräts den Inhalt zu rekonfigurierender Speicherpartitionen bereit. Die Ladeeinrichtung ersetzt bevorzugt den Inhalt einer zu rekonfigurierenden Speicherpartition durch einen bereit gehaltenen Inhalt der Speicherpartition. In der zu rekonfigurierenden Speicherpartition gespeicherte Nutzdaten werden dabei bevorzugt vollständig gelöscht. So wird eine noch höhere Datensicherheit erreicht.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein beispielhaftes verschlüsselndes Funkgerät;
- Fig. 2: ein erstes Ausführungsbeispiel des erfindungsgemäßen Funkgeräts;
- Fig. 3: ein zweites Ausführungsbeispiel des erfindungsgemäßen Funkgeräts;
- Fig. 4: ein drittes Ausführungsbeispiel des erfindungsgemäßen Funkgeräts;
- Fig. 5: ein viertes Ausführungsbeispiel des erfindungsgemäßen Funkgeräts;
- Fig. 6: ein fünftes Ausführungsbeispiel des erfindungsgemäßen Funkgeräts;
- Fig. 7: ein sechstes Ausführungsbeispiel des erfindungsgemäßen Funkgeräts, und
- Fig. 8: ein siebtes Ausführungsbeispiel des erfindungsgemäßen Funkgeräts.

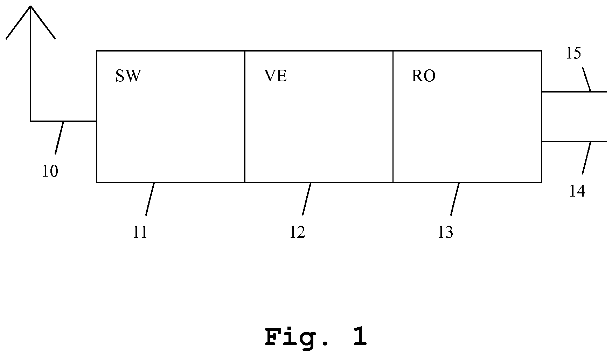

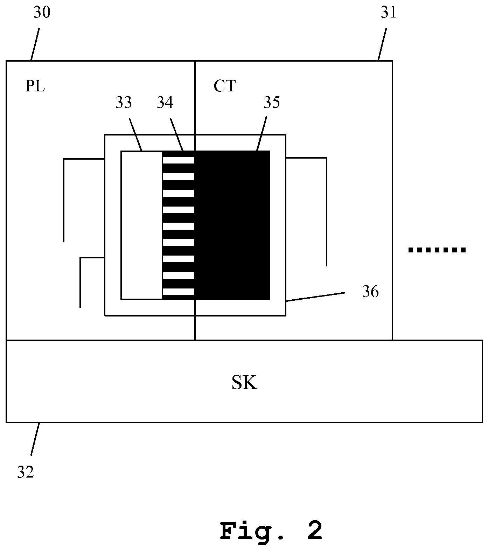

Zunächst wird anhand der Fig. 1 der Aufbau und die Funktionsweise eines verschlüsselnden Funkgeräts und die der gegenwärtigen Erfindung zugrundeliegende Problematik erläutert. Anschließend werden mittels Fig. 2 - 8 der Aufbau und die Funktionsweise verschiedener Formen des erfindungsgemäßen Funkgeräts veranschaulicht. Identische Elemente wurden in ähnlichen Abbildungen zum Teil nicht wiederholt dargestellt und beschrieben.

Ein exemplarisches verschlüsselndes Funkgerät wird in Fig. 1 dargestellt. Es besteht aus einer Antenne 10, einer schwarzen Seite 11, einer Verschlüsselungseinrichtung 12, einer roten Seite 13, einem Steuereingang 15 und einem Dateneingang/-ausgang 14. Der Dateneingang/-ausgang 14 und der Steuereingang 15 sind mit der roten Seite 13 verbunden. Die rote Seite 13 ist mit der Verschlüsselungseinrichtung 12 verbunden. Diese ist mit der schwarzen Seite 11 verbunden. Die Antenne 10 ist mit der schwarzen Seite 11 verbunden.

Die rote Seite 13 dient dabei der Verarbeitung unverschlüsselter Daten. So werden über den Dateneingang/- ausgang 14 im Sendefall unverschlüsselt Daten an die rote Seite 13 übermittelt. Diese führt eine Datenaufbereitung, z.B. eine Rauschunterdrückung oder eine Filterung durch. Gleichzeitig empfängt die rote Seite 13 Steuersignale über den Steuereingang 15. Die noch immer unverschlüsselten, verarbeiteten Daten werden von der roten Seite 13 an die Verschlüsselungseinrichtung 12 übermittelt und von dieser verschlüsselt. Die nun verschlüsselten Daten werden von der Verschlüsselungseinrichtung 12 an die schwarze Seite 11 übertragen. Zu diesem Zeitpunkt handelt es sich bei den verschlüsselten Daten um binäre Signale. Um die verschlüsselten Daten auf ein Aussenden vorzubereiten, sind weitere Verarbeitungsschritte notwendig. So ist zumindest eine Modulation der verschlüsselten Daten notwendig. Diese Verarbeitungsschritte werden von der schwarzen Seite 11 durchgeführt. Die modulierten und anschließend in ein analoges Signal gewandelten verschlüsselten Daten werden von der schwarzen Seite 11 an die Antenne 10 übertragen und von dieser ausgesendet.

Im Empfangsfall laufen die Daten den umgekehrten Weg. Verschlüsselte analoge Signale werden von der Antenne 10 empfangen. Diese werden von der schwarzen Seite 11 digitalisiert und demoduliert. Es liegen nun binäre verschlüsselte Signale vor. Diese werden an die Verschlüsselungseinrichtung 12 übertragen und von dieser entschlüsselt. Die entschlüsselten Signale werden nun von der roten Seite 13 aufbereitet und dem Dateneingang/- ausgang 14 zugeführt.

Durch die gemeinsame Verarbeitung von Steuersignalen und Nutzdaten können schützenswerte Informationen absichtlich oder versehentlich beeinflusst werden. Auch ist eine Beeinflussung von Wellenformbestandteilen durch Infrastrukturbestandteile möglich. Auch so können schützenswerte Informationen absichtlich oder versehentlich beeinflusst werden.

Insbesondere beim Einsatz von softwarebasierten bzw. softwaredefinierten Funkgeräten (SDR=software defined radio) besteht eine erhebliche Gefahr der versehentlichen Datenverfälschung und/oder Datenweitergabe aufgrund fehlerhafter Software. Um dieses Problem zu vermeiden, ist es notwendig, für sämtliche Softwarekomponenten die Fehlerfreiheit und damit die Verfälschungssicherheit und Abhörsicherheit der sensiblen Daten zu beweisen. Da sämtliche Hardwarekomponenten und sämtliche Softwarekomponenten des Funkgeräts diesen Beweis durchlaufen müssen, erfordert dies einen erheblichen Aufwand und ist bei komplexen Funkgeräten nicht immer möglich.

In Fig. 2 wird ein erstes Ausführungsbeispiel des erfindungsgemäßen Funkgeräts gezeigt. Das erfindungsgemäße Funkgerät setzt einen Separations-Kernel 32 ein. Es handelt sich dabei um ein Betriebssystem, welches sich durch eine sehr geringe Komplexität auszeichnet. Ein solcher Separations-Kernel wird z.B. von Firma Greenhills, Tampa, Florida, USA hergestellt. Für einen solchen Separations-Kernel ist der Beweis der Verfälschungssicherheit und der Abhörsicherheit aufgrund der geringen Komplexität sehr einfach und im Fall des Einsatzes des verfügbaren Separation-Kernels bereits erbracht. Es wird so erreicht, dass lediglich weitere Komponenten des Funkgeräts, welche von dem Separations-Kernel gesteuert werden, zertifiziert werden müssen, bzw. den Beweis der Verfälschungssicherheit und Abhörsicherheit erfüllen müssen.

In Fig. 2 wird lediglich eine Detailansicht des Ausführungsbeispiels des erfindungsgemäßen Funkgeräts gezeigt. Hier wird lediglich ein Teil einer ersten Verarbeitungseinrichtung, welche unverschlüsselte Daten verarbeitet und damit der roten Seite aus Fig. 1 entspricht, gezeigt. Der Separations-Kernel 32 ist mit einer Steuersignalverarbeitungseinrichtung 31 und einer Nutzdatenverarbeitungseinrichtung 30 verbunden. Die Steuersignalverarbeitungseinrichtung 31 dient dabei der Verarbeitung reiner Steuersignale 35. Die Nutzdatenverarbeitungseinrichtung 30 dient dabei der Verarbeitung von reinen Nutzdaten 33 und mit Nutzdaten verknüpften Steuersignalen 34. Eine Vermischung von Steuersignalen 35 und Nutzdaten 33 wird vermieden, indem sowohl die Steuersignalverarbeitungseinrichtung 31 wie auch die Nutzdatenverarbeitungseinrichtung 30 jeweils über eine eigene Speicherpartition verfügen, und die entsprechenden Daten lediglich in der jeweils dedizierten Speicherpartition bereit gehalten werden.

Ein Verarbeitungsblock 36 verfügt über Datenein-/ und ausgänge. In dem Verarbeitungsblock 36 werden sowohl Steuersignale 35 wie auch Nutzdaten 33 verarbeitet. Darüber hinaus werden mit Nutzdaten verknüpfte Steuersignale 34 von dem Verarbeitungsblock 36 verarbeitet. Obwohl sich der Verarbeitungsblock 36 sowohl über die Steuersignalverarbeitungseinrichtung 31, wie auch über die Nutzdatenverarbeitungseinrichtung 30 erstreckt, besteht keine direkte Verbindung zwischen seinen beiden Abschnitten. Eine Kommunikation der beiden Abschnitte kann lediglich über den Separations-Kernel 32 erfolgen. Da der Separations-Kernel 32 als sicher gilt, ist es bei diesem Aufbau lediglich notwendig, den Beweis der Verfälschungssicherheit und Abhörsicherheit für die Nutzdatenverarbeitungseinrichtung 30 zu erbringen. Lediglich die Nutzdatenverarbeitungseinrichtung 30 verarbeitet die sensiblen Nutzdaten 33 bzw. die mit Steuersignalen verknüpften Nutzdaten 34. Die Steuersignalverarbeitungseinrichtung 31 hat keinerlei direkten Zugriff auf Nutzdaten 33, 34. Es ist deshalb nicht notwendig, den aufwendigen Beweis der Verfälschungssicherheit und Abhörsicherheit für die Steuersignalverarbeitungseinrichtung 31 zu erbringen.

Die Nutzdatenverarbeitungseinrichtung 30 und die Steuersignalverarbeitungseinrichtung 31 verfügen dabei jeweils über einen getrennten Prozessor zur Durchführung der jeweiligen Operationen. Alternativ kann ein gemeinsamer Prozessor eingesetzt werden. In diesem Fall ist jedoch insbesondere darauf zu achten, dass die Trennung zwischen Steuersignalen 35 und Nutzdaten 33 bzw. 34 auch in dem gemeinsamen Prozessor aufrechterhalten wird. Auch der Separations-Kernel 32 kann von dem gemeinsamen Prozessor ausgeführt werden.

Eine solche Trennung in eine Steuersignalverarbeitungseinrichtung 31 und eine Nutzdatenverarbeitungseinrichtung 30 erfolgt bei dem erfindungsgemäßen Funkgerät lediglich auf der roten Seite. Lediglich hier liegen unverschlüsselte Nutzdaten vor. Auf der schwarzen Seite liegen lediglich verschlüsselte Nutzdaten vor. Eine Verfälschung verschlüsselter Nutzdaten oder ein Abfließen verschlüsselter Nutzdaten ist unproblematisch und muss deshalb nicht mit großem Aufwand vermieden werden.

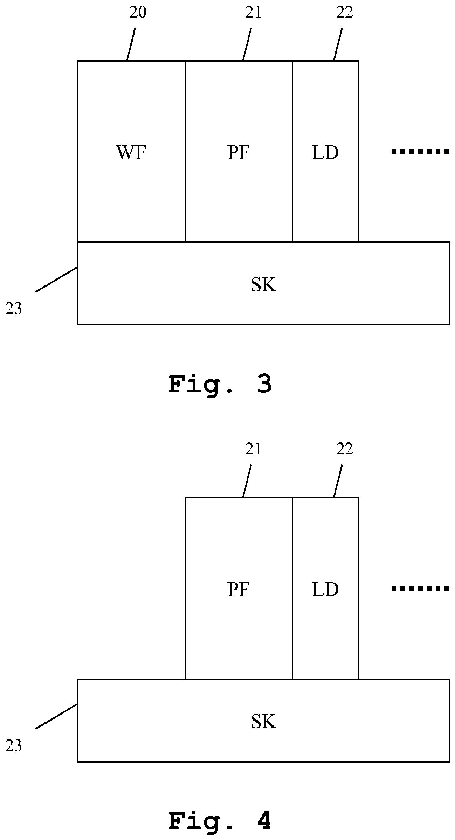

In Fig. 3 wird ein drittes Ausführungsbeispiel des erfindungsgemäßen Funkgeräts gezeigt. Auch hier wird lediglich eine Detailansicht des Funkgeräts dargestellt. So wird hier eine Verarbeitungseinrichtung, welche der roten Seite oder der schwarzen Seite aus Fig. 1 entspricht, gezeigt. Ein Separations-Kernel 23, wie er anhand von Fig. 2 beschrieben ist, ist mit einer Wellenformverarbeitungseinrichtung 20, einer Plattformverarbeitungseinrichtung 21 und einer Ladeeinrichtung 22 verbunden. Der Separations-Kernel 23 kann dabei mit weiteren Einrichtungen verbunden sein. Die Wellenformverarbeitungseinrichtung 20 dient der Verarbeitung wellenformspezifischer Daten. D.h. auf der schwarzen Seite finden hier z.B. die Modulation und Demodulation statt. Auf der roten Seite dient die Wellenformverarbeitungseinrichtung z.B. der Gruppierung der Daten in Blöcke, welche verschlüsselt werden können und anschließend mit geringem Aufwand moduliert werden können.

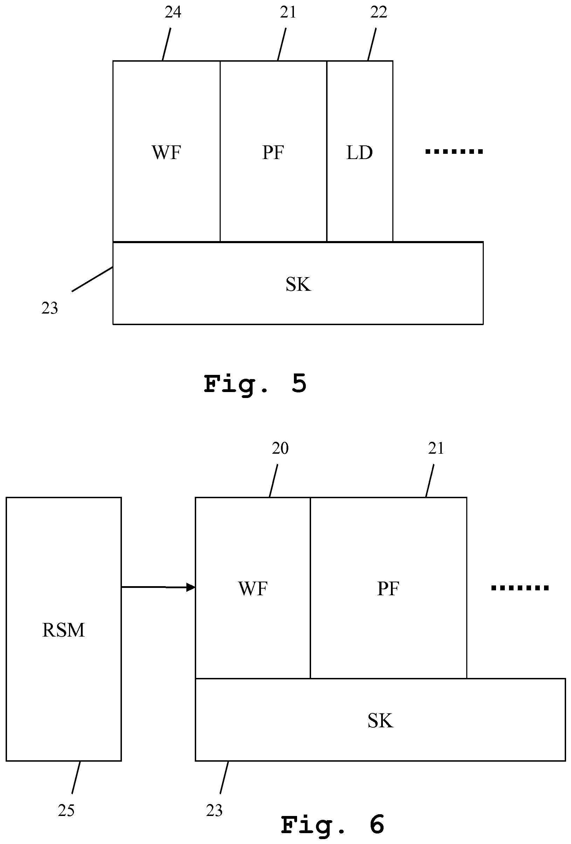

Die Plattformverarbeitungseinrichtung 21 dient der Verarbeitung plattformspezifischer Daten. So wird von hier die Mensch-Maschine-Schnittstelle bereitgestellt. Die Ladeeinrichtung 22 dient der Bereitstellung von Inhalten bei einer Rekonfigurierung des Funkgeräts. Hierauf wird anhand von Fig. 4 und 5 näher eingegangen.

Wie bereits anhand von Fig. 2 beschrieben, verfügen auch die Wellenformverarbeitungseinrichtung 20 und die Plattformverarbeitungseinrichtung 21 über dedizierte Speicherbereiche bzw. Speicherpartitionen. Eine Vermischung von Wellenformdaten und Plattformdaten wird so vermieden. Eine Kommunikation der Wellenformverarbeitungseinrichtung 20, der Plattformverarbeitungseinrichtung 21 und der Ladeeinrichtung 22 erfolgt auch hier lediglich über den Separations-Kernel 23. Auch so wird eine Vermischung der entsprechenden Daten verhindert.

Die Wellenformverarbeitungseinrichtung 20, die Plattformverarbeitungseinrichtung 21 und die Ladeeinrichtung 22 verfügen dabei jeweils über einen einzelnen Prozessor, welche die jeweiligen Funktionen durchführen und die entsprechende in den jeweiligen Speicherbereichen bzw. Partitionen gespeicherten Programmteile ausführen. Alternativ kann ein gemeinsamer Prozessor eingesetzt werden. In diesem Fall ist besonders darauf zu achten, dass auch innerhalb des Prozessors die strenge Trennung der Daten aufrechterhalten wird.

Anhand von Fig. 4 und Fig. 5 wird im Folgenden die Funktion der Ladeeinrichtung 22 näher erläutert. Ein softwarebasiertes Funkgerät ist in der Lage, unterschiedliche Wellenformen zu verarbeiten. Hierzu sind durch die Ladeeinrichtung 22 verschiedene Wellenform-Programmteile gespeichert. Soll eine neue Wellenform durch das Funkgerät verarbeitet werden, führt die Ladeeinrichtung 22 zunächst einen Löschungsvorgang durch. D.h. die gegenwärtige genutzte Wellenform 20 wird aus dem Speicher gelöscht. D.h. die gesamte Speicherpartition bzw. der gesamte Speicherbereich, in welchem die Wellenform 20 gespeichert ist, wird gelöscht. Evtl. noch in diesem Speicher gespeicherte sensible Daten werden mit der Wellenform 20 gelöscht. Eine versehentliche Offenbarung dieser Daten kann somit nicht stattfinden. Die Situation nach der Löschung der Wellenform 20 ist in Fig. 4 dargestellt. In einem zweiten Schritt lädt die Ladeeinrichtung 22 einen Wellenform-Inhalt, welcher zur Verarbeitung der neuen Wellenform genutzt wird, in die Wellenform-Speicherpartition. Die Wellenformverarbeitungseinrichtung 24 übernimmt nun die Verarbeitung wellenformspezifischer Daten.

Dabei sind in den Fig. 2 - 6 lediglich die Softwareanteile der Verarbeitungseinrichtungen dargestellt. Die Prozessoren und weitern Hardwareanteile sind der Übersichtlichkeit halber nicht dargestellt.

In Fig. 6 wird ein fünftes Ausführungsbeispiel des erfindungsgemäßen Funkgeräts gezeigt. Die Aufteilung der Funktionalitäten entspricht der Aufteilung wie in Fig. 3-5. Darüber hinaus ist mit der Wellenformverarbeitungseinrichtung 20 eine Verschlüsselungseinrichtung 25 verbunden. Die Verschlüsselungseinrichtung 25 kann der Wellenformverarbeitungseinrichtung 20 dabei ein Löschungssignal senden. Der Softwareanteil der Wellenformverarbeitungseinrichtung 20 wird in diesem Fall augenblicklich vollständig aus der jeweiligen Speicherpartition gelöscht. Eine Extraktion sensibler Daten ist so nicht länger möglich.

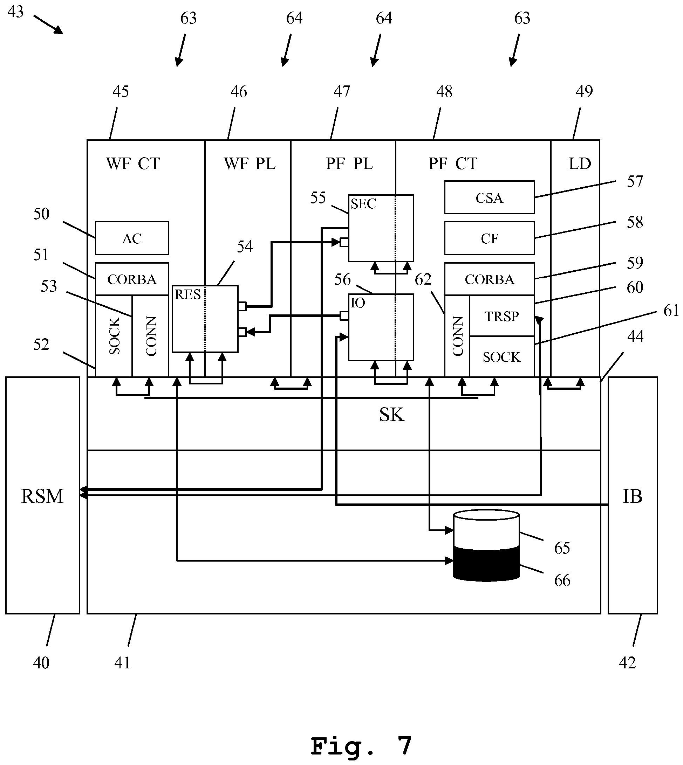

In Fig. 7 wird ein sechstes Ausführungsbeispiel des erfindungsgemäßen Funkgeräts gezeigt. In dieser Abbildung ist eine erste Verarbeitungseinrichtung 43, welche unverschlüsselte Daten verarbeitet und damit der roten Seite aus Fig. 1 entspricht, dargestellt. Ein Interface (Zwischenelement) 42 ist mit einem Separations-Kernel 44 verbunden. Weiterhin ist der Separations-Kernel 44 mit einer Verschlüsselungseinrichtung 40 verbunden. Der Separations-Kernel 44 wird von einer Hardware-Plattform 41 betrieben. Der Separations-Kernel 44 ist darüber hinaus mit einer Steuersignalverarbeitungseinrichtung 63 und einer Nutzdatenverarbeitungseinrichtung 64 verbunden. Die Steuersignalverarbeitungseinrichtung 63 teilt sich dabei auf in eine Wellenformverarbeitungseinrichtung 45 und eine Plattformverarbeitungseinrichtung 48. Auch die Nutzdatenverarbeitungseinrichtung 64 teilt sich dabei auf in eine Wellenformverarbeitungseinrichtung 46 und eine Plattformverarbeitungseinrichtung 47.

Darüber hinaus ist der Separations-Kernel 44 mit einer Ladeeinrichtung 49 verbunden. Wie bereits anhand der vorgehenden Abbildungen gezeigt, kann auch hier eine Kommunikation zwischen den verschiedenen Einrichtungen 45 bis 49 nicht direkt erfolgen, sondern muss stets über den Separations-Kernel 44 laufen. Der Übersichtlichkeit halber sind jedoch einige Pfeile, welche Kommunikationsverbindungen anzeigen, nicht über den Separations-Kernel 44 geführt.

Wie auch in den vorangegangenen Figuren ist hier überwiegend lediglich der Softwareanteil der jeweiligen Einrichtungen dargestellt. Die zugrundeliegende Hardware wird hier als Hardware-Plattform 41 zusammengefasst.

Die Hardware-Plattform 41 verfügt über eine Speichereinrichtung, welche aus einem Plattformspeicher 65 und einem Wellenformspeicher 66 zusammengesetzt ist. Auch hier erfolgt eine strikte Trennung der Speicherbereiche bzw. Speicherpartitionen. Es handelt sich dabei um einen nicht-flüchtigen Speicher. Die Plattformverarbeitungseinrichtung 47 der Steuersignalverarbeitungseinrichtung 63 speichert dabei für die Installation neuer Wellenformen notwendige Daten im dem Plattformspeicher 65 ab. Die Wellenformverarbeitungseinrichtung 45 der Steuersignalverarbeitungseinrichtung 63 speichert dabei wellenformspezifische Parameter in dem Wellenformspeicher 66 ab.

Anhand auszusendender Daten werden weitere Bestandteile der Einrichtungen 45 bis 49 erläutert. Übermittelte Nutzdaten werden dabei als breite Pfeile dargestellt, während übermittelte Steuersignale als schmale Pfeile dargestellt sind. Das Interface 42, welches ein Mikrofon und einen Lautsprecher oder eine Datenschnittstelle beinhaltet, empfängt ein Sprachsignal und wandelt es in digitalisierte zu übertragende Daten um. Diese Daten werden an eine Interface-Einrichtung 56 übertragen. Die Interface-Einrichtung 56 befindet sich zum Teil in der Plattformverarbeitungseinrichtung 47 der Nutzdatenverarbeitungseinrichtung 64. Ein weiterer Teil der Interface-Einrichtung 56 befindet sich in der Plattformverarbeitungseinrichtung 48 der Steuersignalverarbeitungseinrichtung 63. Der Nutzdatenteil der Interface-Einrichtung 56 empfängt die digitalisierten Daten. Sie werden daraufhin über den Separations-Kernel 44 an einen Verarbeitungsblock 54 weitergeleitet. Der Verarbeitungsblock 54 ist dabei ein generischer Verarbeitungsblock der Wellenformverarbeitungseinrichtung 45, 46. Er weist einen Nutzdatenabschnitt und einen Steuersignalabschnitt auf. Das Signal wird von dem Nutzdatenabschnitt des Verarbeitungsblocks 54 empfangen und von diesem verarbeitet. Bei dieser Verarbeitung handelt es sich um eine wellenformspezifische Verarbeitung. D.h. es erfolgt z.B. eine Blockbildung der Daten.

Die weiterverarbeiteten Daten werden an eine Sicherheitseinrichtung 55 übertragen. Auch diese Übertragung läuft dabei über den Separations-Kernel 44. Die Sicherheitseinrichtung 55 befindet sich innerhalb der Plattformverarbeitungseinrichtung 47 der Nutzdatenverarbeitungseinrichtung 64 und der Plattformverarbeitungseinrichtung 48 der Steuersignalverarbeitungseinrichtung 63. Sie weist einen Nutzdatenabschnitt und einen Steuersignalabschnitt auf. Die Sicherheitseinrichtung 55 empfängt die Nutzdaten mit ihrem Nutzdatenabschnitt. Die Sicherheitseinrichtung 55 dient als Schnittstelle zu der Verschlüsselungseinrichtung 40. Somit übermittelt die Sicherheitseinrichtung 55 die auszusendenden Daten an die Verschlüsselungseinrichtung 40. Auch diese Übertragung läuft über den Separations-Kernel 44.

Empfangene Daten nehmen dabei den umgekehrten Weg von der Verschlüsselungseinrichtung 40 über die Sicherheitseinrichtung 55 zu den Verarbeitungsblock 54. Von dem Verarbeitungsblock 54 laufen die empfangenen Daten an die Interface-Einrichtung 56 und von dieser an das Interface 42, von welchem die Daten ausgegeben werden. Die Steuerung des Funkgeräts erfolgt dabei mittels der Steuersignalverarbeitungseinrichtung 63, welche aus der Wellenformverarbeitungseinrichtung 45 und der Plattformverarbeitungseinrichtung 48 zusammengesetzt ist.

Die Wellenformverarbeitungseinrichtung 45 beinhaltet dabei eine Steuereinrichtung 50, eine Schnittstelle 51, einen ersten Kommunikationsanschluss 52 und einen zweiten Kommunikationsanschluss 53. Die Steuereinrichtung 50 dient der Parametrierung der Wellenform. Die Schnittstelle 51 dient dabei der Kommunikation der Speicherbereiche bzw. Speicherpartitionen der Einrichtungen 45 bis 49 untereinander. Sie steuert die Kommunikationsanschlüsse 52, 53. Der erste Kommunikationsanschluss 52 dient der Kommunikation mittels Internet Protokoll. Der zweite Kommunikationsanschluss 53 dient dabei der internen Kommunikation.

Auch die Plattformverarbeitungseinrichtung 48 der Steuersignalverarbeitungseinrichtung 63 beinhaltet eine Steuereinrichtung 59, einen ersten Kommunikationsanschluss 61 und einen zweiten Kommunikationsanschluss 62. Darüber hinaus beinhaltet sie einen dritten Kommunikationsanschluss 60, eine Ladesteuereinrichtung 58 und eine Infrastruktursteuereinrichtung 57.

Die Schnittstelle 59 dient auch hier der Kommunikation der Speicherbereiche bzw. Speicherpartitionen der Einrichtungen 45 bis 49 untereinander. Sie steuert die Kommunikationsanschlüsse 60, 61 und 62. Der erste Kommunikationsanschluss 61 dient dabei der Kommunikation mittels Internet Protokoll. Der zweite Kommunikationsanschluss 62 dient dabei der internen Kommunikation. Der dritte Kommunikationsanschluss dient dabei der externen Kommunikation mit der Verschlüsselungseinrichtung 40. So könnte z.B. der Kommunikationsanschluss 52 ein Steuersignal im Internet Protokoll an den Kommunikationsanschluss 61 übertragen. Das Steuersignal wird anschließend von dem Kommunikationsanschluss 60 an die Verschlüsselungseinrichtung 40 übertragen. Die Infrastruktursteuereinrichtung 57 stellt ein Nutzerinterface zur Verfügung und steuert einen Selbsttest des Funkgeräts. Darüber hinaus führt es eine Nutzerauthentifizierung durch.

Die Ladesteuereinrichtung 58 initiiert einen Austausch der Softwarekomponenten der Wellenformverarbeitungseinrichtung 45 der Steuersignalverarbeitungseinrichtung 63 und der Wellenformverarbeitungseinrichtung 46 der Nutzdatenverarbeitungseinrichtung 64, sobald eine neue Wellenform benötigt wird. Sie gibt hierzu einen Befehl über den Separations-Kernel 44 an die Ladeeinrichtung 49 aus. Die Ladeeinrichtung 49 dient der Rekonfiguration des softwarebasierten Funkgeräts. Soll eine neue Wellenform empfangen oder gesendet werden, löscht die Ladeeinrichtung 49 den Softwareanteil der Wellenformverarbeitungseinrichtung 46 der Nutzdatenverarbeitungseinrichtung 64 und lädt einen neuen Softwareanteil zur Verarbeitung der neuen Wellenform.

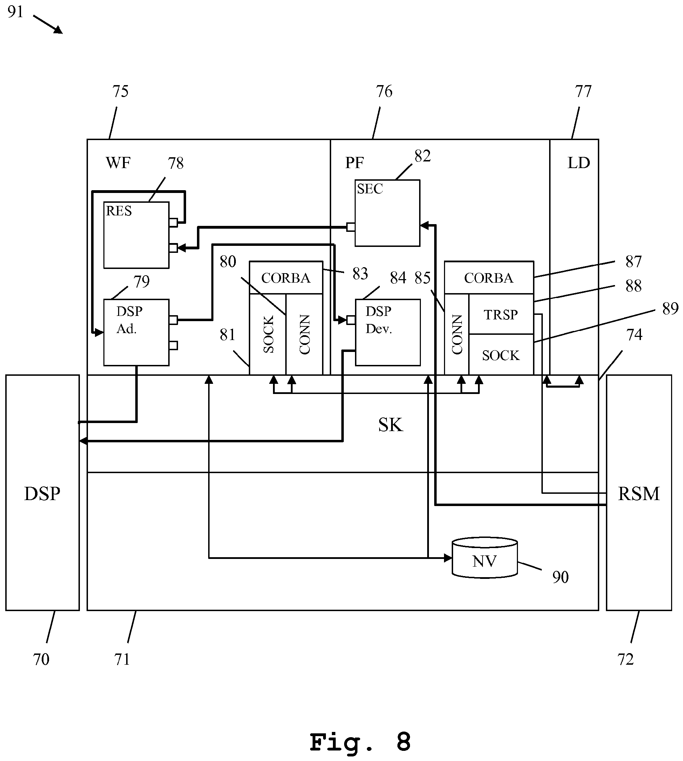

Anhand von Fig. 8 wird ein siebtes Ausführungsbeispiel des erfindungsgemäßen Funkgeräts erläutert. Hier dargestellt ist eine Verarbeitungseinrichtung 91, welche verschlüsselte Daten verarbeitet, und damit der schwarzen Seite aus Fig. 1 entspricht. Eine Verschlüsselungseinrichtung 72 ist mit einem Separations-Kernel 74 verbunden. Der Separations-Kernel 74 wird dabei von einer Hardware-Plattform 71 ausgeführt. Der Separations-Kernel 74 ist weiterhin mit einem digitalen Signalprozessor 70 verbunden. Der Separations-Kernel 74 ist außerdem mit einer Wellenformverarbeitungseinrichtung 75 und einer Plattformverarbeitungseinrichtung 76 verbunden. Darüber hinaus ist er mit einer Ladeeinrichtung 77 verbunden.

Wie bereits erläutert, findet hier keine Trennung zwischen einer Nutzdatenverarbeitungseinrichtung und einer Steuersignalverarbeitungseinrichtung statt, da sämtliche Nutzdaten hier bereits verschlüsselt vorliegen. Auch in diesem Ausführungsbeispiel sind Datenverbindungen durch breite Pfeile dargestellt während Steuersignalverbindungen durch schmale Pfeile dargestellt sind. Anhand auszusendender Daten werden Bestandteile der Wellenformverarbeitungseinrichtung 75 und der Plattformverarbeitungseinrichtung 76 näher erläutert.

Die Verschlüsselungseinrichtung 72 überträgt verschlüsselte Daten an eine Sicherheitseinrichtung 82. Diese stellt das Interface zu der Verschlüsselungseinrichtung 72 dar. Sie ist Bestandteil der Plattformverarbeitungseinrichtung 76. Über den Separations-Kernel 74 werden die verschlüsselten Daten an einen Verarbeitungsblock 78, welcher Teil der Wellenformverarbeitungseinrichtung 75 ist, übertragen. Der Verarbeitungsblock 78 führt wellenformspezifische Verarbeitungsschritte an den Daten durch. Die weiterverarbeiteten verschlüsselten Daten werden an einen DSP-Adapter 79 übertragen. DSP steht für digitaler SignalProzessor (digital signal processor). Dieser ist ebenfalls Teil der Wellenformverarbeitungseinrichtung 75. Er leitet die Daten weiter an ein DSP-Gerät 84, welches Teil der Plattformverarbeitungseinrichtung 76 ist. Dieses leitet die Daten an den digitalen Signalprozessor 70 weiter, welcher die Signale noch einmal weiterverarbeitet und an die Antenne überträgt. Alternativ überträgt der DSP-Adapter 79 die Daten direkt an den digitalen Signalprozessor 70. Das DSP-Gerät 84 dient weiterhin der Steuerung des digitalen Signalprozessors 70. So lädt und startet das DSP-Gerät 84 den digitalen Signalprozessor 70.

Empfangene Daten nehmen dabei den umgekehrten Weg. Sie werden von einer hier nicht dargestellten Antenne als analoge Signale empfangen, digitalisiert und von dem digitalen Signalprozessor (DSP) 70 weiterverarbeitet. Von diesem werden sie an das DSP-Gerät 84 und von diesem an den DSP-Adapter 79 übertragen. Alternativ werden sie direkt von dem DSP 70 an den DSP-Adapter 79 übertragen. Der DSP-Adapter 79 überträgt die Daten an den Verarbeitungsblock 78, welcher sie weiterverarbeitet Daraufhin werden die Daten an die Sicherheitseinrichtung 82 und von dieser an die Verschlüsselungseinrichtung 72 übertragen. Die Verschlüsselungseinrichtung 72 entschlüsselt die verschlüsselten Daten. Die Wellenformverarbeitungseinrichtung 75 speichert dabei in einem nicht-flüchtigen Speicher 90 wellenformspezifische Parameter. Die Plattformverarbeitungseinrichtung 76 speichert ebenfalls in dem Speicher 90 plattformspezifische Parameter. Eine Trennung der Speicherbereiche muss hier nicht erfolgen, da sämtliche Nutzdaten hier bereits verschlüsselt sind.

Darüber hinaus beinhalten die Wellenformverarbeitungseinrichtung 75 und die Plattformverarbeitungseinrichtung 76 jeweils eine Steuereinrichtung 83, 87, einen ersten Kommunikationsanschluss 80, 85 und einen zweiten Kommunikationsanschluss 81, 89. Darüber hinaus beinhaltet die Plattformverarbeitungseinrichtung 76 einen dritten Kommunikationsanschluss 88. Wie auch in Fig. 7 dienen die Schnittstellen 83, 87 hier der Kommunikation der Speicherbereiche bzw. Speicherpartitionen der Einrichtungen 75, 76 untereinander. Die Steuereinrichtung 83 steuert die Kommunikationsanschlüsse 80, 81, während die Steuereinrichtung 87 die Kommunikationsanschlüsse 85, 88, 89 steuert. Die ersten Kommunikationsanschlüsse 80, 85 dienen dabei der internen Kommunikation. Die zweiten Kommunikationsanschlüsse 81, 89 dienen der Kommunikation mittels Internet Protokoll. Der dritte Kommunikationsanschluss 88 dient dabei der externen Kommunikation mit der Verschlüsselungseinrichtung 72. So könnte z.B. die Verschlüsselungseinrichtung ein Steuersignal über den dritten Kommunikationsanschluss 88 an die Plattformverarbeitungseinrichtung 76 übertragen. Das Steuersignal wird anschließend von dem zweiten Kommunikationsanschluss 89 der Plattformverarbeitungseinrichtung 76 an den zweiten Kommunikationsanschluss 81 der Wellenformverarbeitungseinrichtung 75 übertragen.

Die Ladeeinrichtung 77 dient der Rekonfiguration des softwarebasierten Funkgeräts. Soll eine neue Wellenform empfangen oder gesendet werden, löscht die Ladeeinrichtung 77 den Softwareanteil der Wellenformverarbeitungseinrichtung 75 und lädt einen neuen Softwareanteil zur Verarbeitung der neuen Wellenform.

Die Erfindung ist nicht auf das dargestellte Ausführungsbeispiel beschränkt. Alle vorstehend beschriebenen Merkmale oder in den Figuren gezeigten Merkmale sind im Rahmen der Erfindung beliebig vorteilhaft miteinander kombinierbar.

## Patentansprüche

1. Funkgerät mit einer Verschlüsselungseinrichtung (40, 72), einer ersten Verarbeitungseinrichtung (43) und einer zweiten Verarbeitungseinrichtung (91),
wobei die erste Verarbeitungseinrichtung (43) dazu ausgebildet ist, unverschlüsselte Daten zu verarbeiten, wobei die zweite Verarbeitungseinrichtung (91) dazu ausgebildet ist, verschlüsselte Daten zu verarbeiten, wobei die Verschlüsselungseinrichtung (40, 72) dazu ausgebildet ist, Daten zu verschlüsseln und zu entschlüsseln,
wobei die erste Verarbeitungseinrichtung (43) eine Steuersignalverarbeitungseinrichtung (31, 63) zur Verarbeitung von lediglich Steuersignalen (35) beinhaltet, und/oder
die erste Verarbeitungseinrichtung (43) eine Nutzdatenverarbeitungseinrichtung (30, 64) zur Verarbeitung von lediglich Nutzdaten (33) und/oder von mit Nutzdaten verknüpften Steuersignalen (34) beinhaltet, und wobei das Funkgerät weiterhin eine Ladeeinrichtung (22, 49, 77) beinhaltet,
wobei die Ladeeinrichtung (22, 49, 77) dazu ausgebildet ist, eine Rekonfigurierung des Funkgeräts durchzuführen, wobei die Ladeeinrichtung (22, 49, 77) dazu ausgebildet ist, bei der Rekonfigurierung des Funkgeräts den Inhalt zu rekonfigurierender Speicherpartitionen bereit zu halten, wobei die Ladeeinrichtung (22, 49, 77) dazu ausgebildet ist, den Inhalt einer zu rekonfigurierenden Speicherpartition durch einen bereit gehaltenen Inhalt der Speicherpartition zu ersetzen, und
wobei die Ladeeinrichtung (22, 49, 77) dazu ausgebildet ist, in der zu rekonfigurierenden Speicherpartition gespeicherte Nutzdaten vollständig zu löschen, falls eine neue Wellenform verarbeitet werden soll,
**dadurch gekennzeichnet,**
**dass** das Funkgerät ein Betriebssystem (23, 32, 44, 74) beinhaltet, welches dazu ausgebildet ist mehrere Speicherpartitionen und zumindest einen Prozessor zu verwalten,
**dass** das Betriebssystem (23, 32, 44, 74) dazu ausgebildet ist, sensible Daten abhörsicher und verfälschungssicher zu verwalten,
**dass** das Funkgerät dazu ausgebildet ist, dass eine Kommunikation zwischen der Nutzdatenverarbeitungseinrichtung (30, 64) und der Steuersignalverarbeitungseinrichtung (31, 63) lediglich über das Betriebssystem (23, 32, 44, 74) erfolgt.

2. Funkgerät nach Anspruch 1,
**dadurch gekennzeichnet,**
**dass** die Steuersignalverarbeitungseinrichtung (31, 63) und die Nutzdatenverarbeitungseinrichtung (30, 64) einen gemeinsamen Prozessor nutzen.

3. Funkgerät nach Anspruch 1 oder 2,
**dadurch gekennzeichnet,**
**dass** die Steuersignalverarbeitungseinrichtung (31, 63) und die Nutzdatenverarbeitungseinrichtung (30, 64) jeweils über eine dedizierte Speicherpartition verfügen.

4. Funkgerät nach einem der Ansprüche 1 bis 3
**dadurch gekennzeichnet,**
**dass** die Steuersignalverarbeitungseinrichtung (63) eine erste Wellenformverarbeitungseinrichtung (45) die dazu ausgebildet ist, wellenformspezifische Daten zu verarbeiten und eine erste Plattformverarbeitungseinrichtung (48) ) die dazu ausgebildet ist, plattformspezifische Daten zu verarbeiten, beinhaltet, und
**dass** die Nutzdatenverarbeitungseinrichtung (64) eine zweite Wellenformverarbeitungseinrichtung (46) die dazu ausgebildet ist, wellenformspezifische Daten zu verarbeiten und eine zweite Plattformverarbeitungseinrichtung (47) die dazu ausgebildet ist, plattformspezifische Daten zu verarbeiten, beinhaltet.

5. Funkgerät nach Anspruch 4,
**dadurch gekennzeichnet,**
**dass** die erste Wellenformverarbeitungseinrichtung (45), die erste Plattformverarbeitungseinrichtung (48), die zweite Wellenformverarbeitungseinrichtung (46) und die zweite Plattformverarbeitungseinrichtung (47) jeweils über eine dedizierte Speicherpartition verfügen.

6. Funkgerät nach einem der Ansprüche 1 bis 5,
**dadurch gekennzeichnet,**
**dass** die zweite Verarbeitungseinrichtung (91) eine dritte Wellenformverarbeitungseinrichtung (75) die dazu ausgebildet ist, wellenformspezifische Daten zu verarbeiten und eine dritte Plattformverarbeitungseinrichtung (76) die dazu ausgebildet ist, plattformspezifische Daten zu bearbeiten, beinhaltet.

7. Funkgerät nach Anspruch 6,
**dadurch gekennzeichnet,**
**dass** die dritte Wellenformverarbeitungseinrichtung (75) und die dritte Plattformverarbeitungseinrichtung (76) jeweils über eine dedizierte Speicherpartition verfügen.

8. Funkgerät nach Anspruch 1,
**dadurch gekennzeichnet,**
**dass** die Ladeeinrichtung (22, 49, 77) über eine dedizierte Speicherpartition verfügt.

## Claims

1. A radio device with an encryption unit (40, 72), a first processing unit (43) and a second processing unit (91),
wherein the first processing unit (43) is embodied to process unencrypted data,
wherein the second processing unit (91) is embodied to process encrypted data,
wherein the encryption unit (40, 72) is embodied to encrypt and decrypt data,
wherein the first processing unit (43) contains a control-signal processing unit (31, 63) for processing only control signals (35),
and/or
the first processing unit (43) contains a payload-data processing unit (30, 64) for processing only payload data (33) and/or control signals (34) linked with payload data, and
wherein the radio device further contains a loading unit (22, 49, 77),
wherein the loading unit (22, 49, 77) is embodied to implement a reconfiguration of the radio device,
wherein the loading unit (22, 49, 77) is embodied, during the reconfiguration of the radio device, to hold ready the content of buffer partitions to be reconfigured,
wherein the loading unit (22, 49, 77) is embodied to replace the content of a buffer partition to be reconfigured with a held-ready content of the buffer partition, and
wherein the loading unit (22, 49, 77) is embodied completely to delete payload data buffered in the buffer partition to be reconfigured whenever a new waveform is to be processed,
**characterised in that**
the radio device contains an operating system (23, 32, 44, 74) which is embodied to administer several buffer partitions and at least one processor,
that the operating system (23, 32, 44, 74) is embodied to administer sensitive data in an interception-proof and falsification-proof manner,
that the radio device is embodied in such a manner that a communication between the payload-data processing unit (30, 64) and the control-signal processing unit (31, 63) takes place only via the operating system (23, 32, 44, 74).

2. The radio device according to claim 1,
**characterised in that**
the control-signal processing unit (31, 63) and the payload-data processing unit (30, 64) use a common processor.

3. The radio device according to claim 1 or 2,
**characterised in that**
the control-signal processing unit (31, 63) and the payload-data processing unit (30, 64) each comprise a dedicated buffer partition.

4. The radio device according to any one of claims 1 to 3
**characterised in that**
the control-signal processing unit (63) contains a first waveform processing unit (45) which is embodied to process waveform-specific data and a first platform processing unit (48)) which is embodied to process platform-specific data, and that the payload-data processing unit (64) contains a second waveform processing unit (46) which is embodied to process waveform specific data and a second platform processing unit (47) which is embodied to process platform-specific data.

5. The radio device according to claim 4,
**characterised in that**
the first waveform processing unit (45), the first platform processing unit (48), the second waveform processing unit (46) and the second platform processing unit (47) each comprise a dedicated buffer partition.

6. The radio device according to any one of claims 1 to 5, **characterised in that**
the second processing unit (91) contains a third waveform processing unit (75) which is embodied to process waveform-specific data and a third platform processing unit (76) which is embodied to process platform-specific data.

7. The radio device according to claim 6,
**characterised in that**
the third waveform processing unit (75) and the third platform processing unit (76) each comprise a dedicated buffer partition.

8. The radio device according to claim 1,
**characterised in that**
the loading unit (22, 49, 77) comprises a dedicated buffer partition.

## Revendications

1. Appareil radio avec un dispositif de chiffrement (40, 72), un premier dispositif de traitement (43) et un deuxième dispositif de traitement (91),
dans lequel le premier dispositif de traitement (43) est conçu pour traiter des données non chiffrées,
dans lequel le deuxième dispositif de traitement (91) est conçu pour traiter des données chiffrées,
dans lequel le dispositif de chiffrement (40, 72) est conçu pour chiffrer et pour déchiffrer des données,
dans lequel le premier dispositif de traitement (43) comporte un dispositif de traitement de signal de commande (31, 63) pour le traitement uniquement de signaux de commande (35),
et/ou
le premier dispositif de traitement (43) comporte un dispositif de traitement de données utiles (30, 64) pour le traitement uniquement de données utiles (33) et/ou de signaux de commande (34) combinés à des données utiles, et
dans lequel l'appareil radio comporte en outre un dispositif de charge (22, 49, 77),
dans lequel le dispositif de charge (22, 49, 77) est conçu pour réaliser une reconfiguration de l'appareil radio,
dans lequel le dispositif de charge (22, 49, 77) est conçu pour mettre à disposition le contenu de partitions de mémoire à reconfigurer lors de la reconfiguration de l'appareil radio,
dans lequel le dispositif de charge (22, 49, 77) est conçu pour remplacer le contenu d'une partition de mémoire à reconfigurer par un contenu mis à disposition de la partition de mémoire, et
dans lequel le dispositif de charge (22, 49, 77) est conçu pour supprimer entièrement des données utiles mises en mémoire dans la partition de mémoire à reconfigurer, au cas où une nouvelle forme d'onde viserait à être traitée,
**caractérisé en ce**
**que** l'appareil radio comporte un système d'exploitation (23, 32, 44, 74), lequel est conçu pour gérer plusieurs partitions de mémoire et au moins un processeur,
**que** le système d'exploitation (23, 32, 44, 74) est conçu pour gérer des données sensibles de manière protégée contre l'interception et contre la falsification,
**que** l'appareil radio est conçu pour qu'une communication s'effectue entre le dispositif de traitement de données utiles (30, 64) et le dispositif de traitement de signaux de commande (31, 63) uniquement par l'intermédiaire du système d'exploitation (23, 32, 44, 74).

2. Appareil radio selon la revendication 1,
**caractérisé en ce**
**que** le dispositif de traitement de signaux de commande (31, 63) et le dispositif de traitement de données utiles (30, 64) utilisent un processeur commun.

3. Appareil radio selon la revendication 1 ou 2,
**caractérisé en ce**
**que** le dispositif de traitement de signaux de commande (31, 63) et le dispositif de traitement de données utiles (30, 64) disposent respectivement d'une partition de mémoire dédiée.

4. Appareil radio selon l'une quelconque des revendications 1 à 3
**caractérisé en ce**
**que** le dispositif de traitement de signaux de commande (63) comporte un premier dispositif de traitement de forme d'onde (45), qui est conçu pour traiter des données spécifiques à une forme d'onde et un premier dispositif de traitement de plateforme (48), qui est conçu pour traiter des données spécifiques à une plateforme, et
**que** le dispositif de traitement de données utiles (64) comporte un deuxième dispositif de traitement de forme d'onde (46), qui est conçu pour traiter des données spécifiques à une forme d'onde, et un deuxième dispositif de traitement de plateforme (47), qui est conçu pour traiter des données spécifiques à une plateforme.

5. Appareil radio selon la revendication 4,
**caractérisé en ce**
**que** le premier dispositif de traitement de forme d'onde (45), le premier dispositif de traitement de plateforme (48), le deuxième dispositif de traitement de forme d'onde (46) et le deuxième dispositif de traitement de plateforme (47) disposent respectivement d'une partition de mémoire dédiée.

6. Appareil radio selon l'une quelconque des revendications 1 à 5,
**caractérisé en ce**
**que** le deuxième dispositif de traitement (91) comporte un troisième dispositif de traitement de forme d'onde (75), qui est conçu pour traiter des données spécifiques à une forme d'onde et un troisième dispositif de traitement de plateforme (76), qui est conçu pour traiter des données spécifiques à une plateforme.

7. Appareil radio selon la revendication 6,
**caractérisé en ce**
**que** le troisième dispositif de traitement de forme d'onde (75) et le troisième dispositif de traitement de plateforme (76) disposent respectivement d'une partition de mémoire dédiée.

8. Appareil radio selon la revendication 1,
**caractérisé en ce**
**que** le dispositif de charge (22, 49, 77) dispose d'une partition de mémoire dédiée.
